# EUROPÄISCHE PATENTSCHRIFT

(11) **EP 2 804 012 B1**
(45) Veröffentlichungstag und Bekanntmachung des Hinweises auf die Patenterteilung: **15.04.2015**
(21) Anmeldenummer: 13167405.3
(22) Anmeldetag: 13.05.2013
(51) Int. Cl.: G01S 13/00, G08G 1/015, G07B 15/06

(54) **Verfahren zum Messen der Position einer Oberfläche eines Fahrzeugs**
Method for measuring the position of a surface of a vehicle
Procédé de mesure de la position d'une surface d'un véhicule

(43) Veröffentlichungstag der Anmeldung: 19.11.2014
(73) Patentinhaber: Kapsch TrafficCom AG, 1120 Wien (AT)
(72) Erfinder: Nagy, Oliver, 1190 Wien (AT)
(74) Vertreter: Weiser, Andreas

(56) Entgegenhaltungen:
- EP-A1- 0 015 163
- EP-A2- 0 016 417
- EP-A2- 0 636 900
- WO-A2-01/86320
- AU-B2- 628 655
- DE-B- 1 284 137
- US-A- 2 819 613
- US-A- 5 132 690

## Beschreibung

Die vorliegende Erfindung betrifft Verfahren zum Messen der Position einer Oberfläche eines Fahrzeugs auf einer Fahrbahn.

Die Positionsmessung von Fahrzeugen ist für vielerlei Aufgaben in der Verkehrssteuerung, -überwachung und -vergebührung wichtig, beispielsweise zur Bestimmung der von einem Fahrzeug verwendeten Fahrspur bei einer elektronischen Verkehrskontroll- oder Mautstelle oder auch zur Erkennung der Längsposition eines Fahrzeugs entlang der Fahrbahn, um das Fahrzeug dem Bild einer Verkehrsüberwachungskamera eindeutig zuordnen zu können. Die Messung der Position einer Oberfläche des Fahrzeugs, beispielsweise seiner Deck- und Seitenflächen, ist für eine Größenbestimmung und damit Klassifizierung des Fahrzeugs von Bedeutung, beispielsweise ob es sich um einen PKW oder LKW handelt, um z.B. fahrzeugklassenabhängige Fahrbeschränkungen oder Mautgebühren kontrollieren und durchsetzen zu können.

Zur Positionsmessung werden derzeit überwiegend optische Systeme eingesetzt, wie Laserscanner oder Videokameras. Diese sind auf gute Sichtverhältnisse angewiesen und daher stark witterungsabhängig; bei Regen, Schnee oder Sprühgischt versagen sie häufig. Die Optik von Laserscannern und Videokameras erfordert auch eine häufige Reinigung, um einsatzbereit zu bleiben, und aufgrund mechanisch bewegter Teile haben sie eine begrenzte Lebensdauer und einen begrenzten Temperatureinsatzbereich.

In Teilbereichen wie Verkehrsflussmonitoranlagen werden derzeit auch Radarsysteme verwendet, die von einem erhöhten Punkt aus, beispielsweise einem Antennenmast neben einer Autobahn, bewegte Fahrzeuge mittels Dopplerradars detektieren und ihre Bewegung in einem Radarbild mitverfolgen lassen. Die Positionsmessgenauigkeit solcher Radarsysteme ist begrenzt, und die Dopplerauswertung der Fahrzeuggeschwindigkeiten erfordert einen hohen Rechenaufwand, um das Verkehrsflussbild zu erstellen.

Die Erfindung setzt sich zum Ziel, neuartige Verfahren zur Positionsmessung von Fahrzeugoberflächen zu schaffen, welche störungsunanfälliger sind als die bekannten optischen Verfahren und einfacher, kostengünstiger und genauer als die bekannten Radarverfahren.

Dieses Ziel wird mit einem Verfahren der einleitend genannten Art erreicht, mit den Schritten:
a) Aussenden eines ersten Radarstrahls von einer Sendeposition oberhalb der Ebene der Fahrbahn in einer schräg nach unten geneigten ersten Hauptsenderichtung, Empfangen eines ersten reflektierten Radarstrahls an einer Empfangsposition oberhalb der Ebene der Fahrbahn in einer schräg nach unten geneigten ersten Hauptempfangsrichtung und Umwandeln des ersten reflektierten Radarstrahls in ein erstes Empfangssignal, wobei die Sendeposition und die Empfangsposition voneinander beabstandet sind und die erste Hauptsenderichtung und die erste Hauptempfangsrichtung in einer gemeinsamen Ebene liegen;
b) Aussenden eines zweiten Radarstrahls von der Sendeposition in einer schräg nach unten geneigten zweiten Hauptsenderichtung, Empfangen eines zweiten reflektierten Radarstrahls an der Empfangsposition in einer schräg nach unten geneigten zweiten Hauptempfangsrichtung und Umwandeln des zweiten reflektierten Radarstrahls in ein zweites Empfangssignal, wobei die zweite Hauptsenderichtung und die zweite Hauptempfangsrichtung in der genannten Ebene liegen;
c) Auswählen des Empfangssignals mit der größten Signalstärke; und
d) Ermitteln der genannten Position aus den Sende- und Empfangspositionen und den Hauptsende- und Hauptempfangsrichtungen des Empfangssignals mit der größten Signalstärke;
wobei die Schritte a) und b) entweder zeitlich aufeinanderfolgend oder gleichzeitig durchgeführt werden.

Die Erfindung beruht auf der Verwendung eines richtungssteuerbaren Radarstrahls und einer Auswertung der Empfangssignale des Radarempfängers unter unterschiedlichen Winkelstellungen, wobei das stärkste Empfangssignal jene Sende- und Empfangsrichtungen angibt, in denen die Reflexion an der gesuchten Oberfläche auftritt; mit einfachen geometrischen Berechnungen auf Grundlage der bekannten Sende- und Empfangspositionen sowie der derart ermittelten Sende- und Empfangsrichtungen (Winkel) gegenüber der Fahrbahn als Bezugs- und gegebenenfalls sekundäre Reflexionsebene lassen sich somit einzelne Messpunkte in der durch die Sende- und Empfangsrichtungen aufgespannten Messebene ermitteln. Dazu sind weder Doppler-, Interferenz- noch Laufzeitmessungen erforderlich; es genügen einfache Auswertungen der Signalstärken der Empfangssignale, was die rechentechnische Auswertung des Messverfahrens stark vereinfacht. Das Verfahren ist daher auch mit einer Vielzahl von Radarsendern und -empfängern, die beispielsweise an ein und derselben Fahrbahn angeordnet werden, um mehrere über die Fahrbahn verteilte Messpunkte zu erhalten, mit kostengünstiger Hardware durchführbar.

In einfachen Ausführungsformen der Erfindung können die Radarstrahlen CW- (Continuous Wave-) oder FMCW- (Frequency Modulated Continuous Wave) -Radarstrahlen sein und die Auswerteeinrichtung wertet beispielsweise lediglich die Signalstärken der Empfangssignale aus. An CW- bzw. FMCW-Radarstrahlen kann die Auswerteeinrichtung z.B. Interferenz- oder FMCW-Messungen zur Entfernungsmessung durchführen.

In einer alternativen Ausführungsform der Erfindung enthalten die Radarstrahlen Sendeimpulse und die Empfangssignale folglich Empfangsimpulse, wobei für das genannte Auswählen nur solche Empfangssignale berücksichtigt werden, deren Empfangsimpulse jeweils innerhalb eines vorgegebenen Zeitfensters nach einem Sendeimpuls liegen. Die Zeitfenster ("range gates") können so eingestellt werden, dass Mehrfachreflexionen der Radarstrahlen, beispielsweise an nicht-interessierenden Umgebungsobjekten oder zwischen der Bodenplatte des Fahrzeugs und der Fahrbahn, ausgeblendet werden, um die Messgenauigkeit und Störanfälligkeit zu erhöhen.

Die Messvorrichtung kann je nach Winkelstellung der genannten Hauptsende- und -empfangsrichtungen zur Vermessung unterschiedlicher Oberflächen eines Fahrzeugs verwendet werden. Gemäß einer ersten Ausführungsform sind jede Hauptsenderichtung und zugehörige Hauptempfangsrichtung zueinander parallel, um die Position einer im wesentlichen vertikalen Oberfläche zu messen; gemäß einer alternativen Ausführungsform sind jede Hauptsenderichtung und zugehörige Hauptempfangsrichtung bezüglich der Vertikalen spiegelbildlich geneigt, um die Position einer im wesentlichen horizontalen Oberfläche zu messen. Die erste Ausführungsform vermisst vertikale Oberflächen, beispielsweise die Seiten- oder Stirnwände eines Fahrzeugs, über den Umweg einer Sekundärreflexion an der im wesentlichen horizontalen Fahrbahn ("Corner-Effekt"). Die zweite Ausführungsform misst direkt die Primärreflexion an einer horizontalen Oberfläche, z.B. der Deckfläche oder Motorhaube des Fahrzeugs.

Bevorzugt werden für das Verfahren für nicht nur zwei, sondern viele verschiedene Hauptsende- und Hauptempfangsrichtungen verwendet, um mehr als zwei Empfangsignale zu erhalten, unter denen das Empfangssignal mit der größten Signalstärke ausgewählt wird. Dadurch können eine Vielzahl von Messpunkten in der genannten gemeinsamen Ebene erhalten werden.

Eine weitere Ausführungsform des Verfahrens der Erfindung besteht darin, dass zumindest eine weitere Empfangsposition verwendet wird, um weitere Empfangssignale zu erhalten, wobei unter allen Empfangssignalen und weiteren Empfangssignalen das Empfangssignal mit der größten Signalstärke ausgewählt wird. Dadurch können noch mehr Messpunkte erhalten werden, beispielsweise auch über die Breite der Fahrbahn verteilt, um den Messbereich (die "Apertur") des Messverfahrens zu erhöhen. Bevorzugt liegen dazu die Empfangsposition und die weitere Empfangsposition in der genannten gemeinsamen Ebene, sodass die Ebene eine Messebene bildet, beispielsweise quer zur Fahrbahn oder in Längsrichtung der Fahrbahn, innerhalb der eine Vielzahl von Messpunkten durch Steuerung der jeweiligen Sende- und -empfangsrichtungen und Auswahl der jeweiligen Empfangsposition abgetastet werden kann.

Besonders günstig ist es, wenn die genannte Messebene quer zur Fahrbahn liegt, bevorzugt indem eine die Fahrbahn querüberspannenden Montagebrücke verwendet wird, an welcher Radarsender und Radarempfänger zum Aussenden und Empfangen der Radarstrahlen montiert werden. Dadurch können Positionen des Fahrzeugs bzw. einer Oberfläche desselben in dieser Ebene mit hoher Genauigkeit und einfachen rechentechnischen Mitteln bestimmt werden, beispielsweise die Fahrspur, welche das Fahrzeug verwendet, die Höhe der Deckfläche des Fahrzeugs bezüglich der Fahrbahn oder die Lage einer Seitenfläche des Fahrzeugs. In einer alternativen Ausführungsform könnten die Radarsender und Radarempfänger auch in einer entlang der Fahrbahn ausgerichteten oder schräg zur Fahrbahn verlaufenden Ebene liegen, sodass die Position des Fahrzeugs oder einer Stirnfläche des Fahrzeugs auch in Längsrichtung der Fahrbahn bestimmt werden kann.

Durch die einfache Gestaltung der Radarsender und -empfänger, welche lediglich in ihrer Richtung steuerbar zu sein brauchen, beispielsweise mittels schwenkbarer Antennen oder durch Auswahl unter mehreren fest eingestellten Richtantennen, können sehr leichtgewichtige Komponenten verwendet werden, welche auch zu einer entsprechend leichtgewichtigen und damit kostengünstigen Montagebrückenkonstruktion führen. In einer bevorzugten Ausführungsform werden die Hauptsende- und Hauptempfangsrichtungen mittels phasengesteuerter Antennenarrays eingestellt, was mechanisch bewegte Teile erübrigt und eine wartungsfreie und langlebige Konstruktion ermöglicht.

In beiden Varianten kann zusätzlich eine Impulslaufzeitmessung durchgeführt werden, wenn gepulste Radarstrahlen verwendet werden, um die Messgenauigkeit zu erhöhen. Dazu werden Impulslaufzeitmessungen zwischen Sende- und Empfangsimpulsen durchgeführt und daraus der Abstand der Oberfläche zu den Sende- und Empfangspositionen ermittelt, um die Positionsmessung zu verbessern. Alternativ können die Radarstrahlen FMCW-Radarstrahlen sein und daraus der Abstand der Oberfläche zu den Sende- und Empfangspositionen nach dem FMCW-Verfahren ermittelt werden, oder die Radarstrahlen können CW-Radarstrahlen sein und daraus der Abstand der Oberfläche zu den Sende- und Empfangspositionen nach einem Phaseninterferenz-Verfahren ermittelt werden, um die Positionsmessung zu verbessern.

Gemäß einer weiteren vorteilhaften Ausführungsform der Erfindung werden die Radarstrahlen von Radarsendeempfänger gesendet und empfangen, die jeweils im Code-, Zeit- oder Frequenzmultiplex wahlweise als Sender oder Empfänger betrieben werden. Dadurch kann einerseits der Fertigungs- und Montageaufwand vereinfacht werden, weil einheitliche Komponenten, nämlich Radarsendeempfänger, montiert werden können, die lediglich verschieden angesteuert und ausgewertet werden. Andererseits können damit noch mehr Messpunkte mit derselben Anordnung vermessen werden: Die einzelnen Komponenten können an ihrer jeweiligen Montageposition wahlweise als Sender oder Empfänger wirken, wodurch sich mehr Kombinationsmöglichkeiten und damit mehr vermessbare Punkte in der Messebene ergeben.

Das Verfahren der Erfindung eignet sich für alle Arten von Radar, sei es Impuls-, CW- oder FMCW-Radar, wobei die Radarstrahlen auch auf verschiedenste Arten moduliert bzw. codiert sein können. Besonders günstig ist die Verwendung von sehr hochfrequenten Radarstrahlen, insbesondere im Frequenzbereich von 1 GHz bis 100 GHz, bevorzugt 50 GHz bis 100 GHz. Diese führt zu sehr kleinen Antennenanordnungen, die auch bei kleinen Abmessungen stark gebündelte Richtwirkungen haben, und eröffnet die Möglichkeit, eine Vielzahl leichtgewichtiger Sender und Empfänger bzw. Sendeempfänger an einer Montagebrücke zu montieren, welche wiederum entsprechend gering dimensioniert werden kann und damit kostengünstiger ist als für herkömmliche optische Positionsmesssysteme.

Die Erfindung wird nachstehend anhand von in den beigeschlossenen Zeichnungen dargestellten Ausführungsbeispielen näher erläutert. In den Zeichnungen zeigen:
Fig. 1 ein Beispiel einer Vorrichtung zur Positionsvermessung schematisch in Fahrbahnlängsrichtung gesehen;
Fig. 2a die Vorrichtung von Fig. 1 in der Draufsicht;
Fig. 2b eine alternative Ausführungsform der Vorrichtung in der Draufsicht;
die Fig. 3 und 4 die geometrischen Verhältnisse bei der Vermessung einer Seitenfläche (Fig. 3) bzw. Deckfläche (Fig. 4) eines Fahrzeugs mithilfe zweier beispielhafter Verfahrensvarianten der Erfindung;
die Fig. 5 und 6 die geometrischen Verhältnisse bei der Vermessung einer Seitenfläche (Fig. 5) bzw. Deckfläche (Fig. 6) eines Fahrzeugs mithilfe zweier weiterer beispielhafter Verfahrensvarianten der Erfindung;
Fig. 7 ein Zeitdiagramm der Range-Gating-Ausführungsformen der Verfahren der Erfindung; und
Fig. 8 ein Zeitdiagramm der Empfangssignale im Rahmen des Verfahrens der Erfindung gemäß den Fig. 5 und 6.

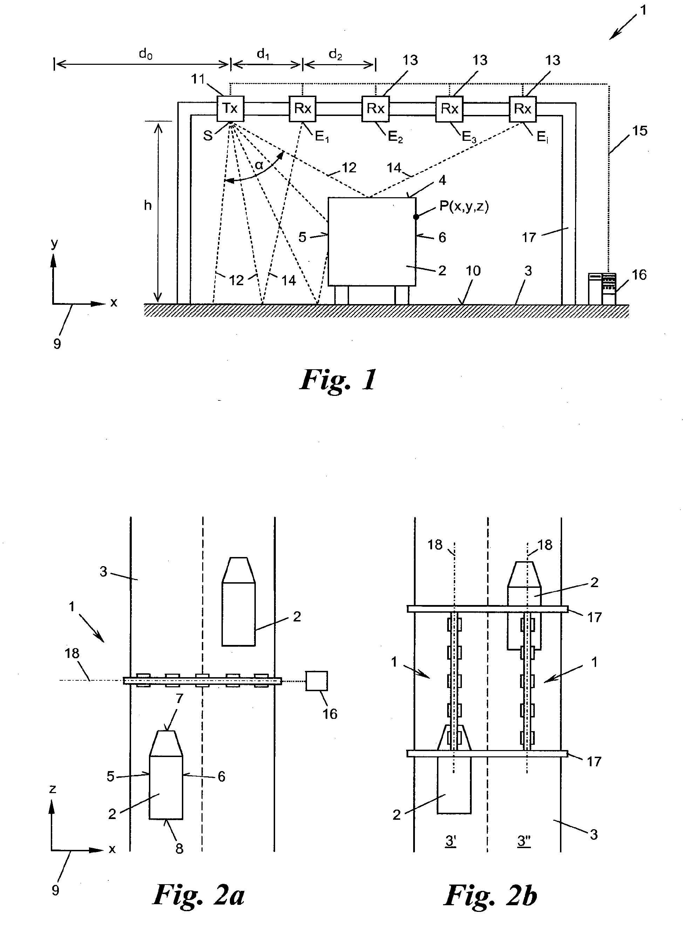

In den Fig. 1 und 2a ist eine Vorrichtung 1 zum Messen der Position eines Fahrzeugs 2 auf einer Fahrbahn 3 gezeigt. Der Begriff "Position" wird hier in seiner allgemeinsten Form verstanden und umfasst eine, zwei oder drei der Koordinaten x, y, z eines beliebigen Punktes P des Fahrzeugs 2 oder einer seiner Oberflächen, beispielsweise einer Deckfläche 4, Seitenfläche 5, 6 oder Stirnfläche 7, 8, in einem Koordinatensystem 9. Das Koordinatensystem 9 ist bevorzugt auf die Lage der Vorrichtung 1 bezüglich der Fahrbahn 3 bezogen; im vorliegenden Beispiel liegt die Ebene 10 der Fahrbahn 3 in der x/z-Ebene des Koordinatensystems, die Fahrbahnlängsrichtung verläuft in z-Richtung und die Fahrbahnquerrichtung in x-Richtung; die y-Ko-ordinate definiert die Höhe eines Punktes P oberhalb der Fahrbahnebene 10.

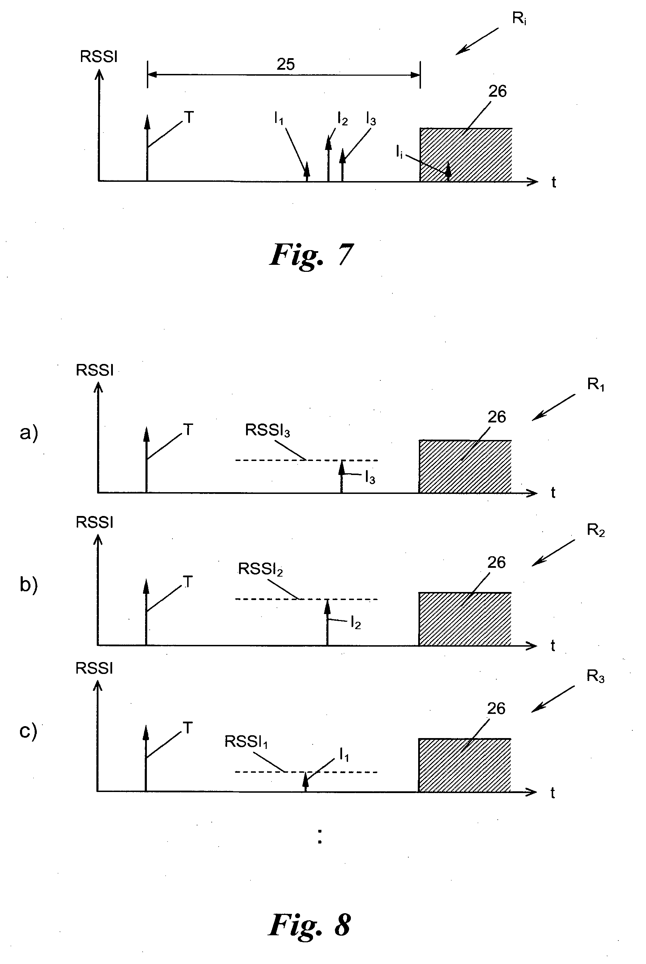

Die Vorrichtung 1 umfasst einen Radarsender 11, der in einer Sendeposition S oberhalb der Ebene 10 der Fahrbahn 3 angeordnet ist und Radarstrahlen 12 nach unten hin aussendet, sowie eine Mehrzahl von Radarempfängern 13, die in verschiedenen Empfangspositionen E₁, E₂, ..., allgemein Eᵢ, ebenfalls oberhalb der Fahrbahnebene 10 angeordnet sind und Reflexionen 14 der Radarstrahlen 12 von unten her empfangen. Die Radarempfänger 13 wandeln die empfangenen reflektierten Radarstrahlen 14 jeweils in ein Empfangssignal R₁, R₂ ..., allgemein Rᵢ, (Fig. 7, 8) um, das sie über eine Leitung 15 an eine Auswerteeinrichtung 16 zur Auswertung senden; über die Leitung 15 steht die Auswerteeinrichtung 16 auch mit dem Radarsender 11 in Verbindung, um diesen zu steuern.

Die Radarempfänger 13 haben jeweils zum Radarsender 11 und zueinander Abstände d₁, d₂, ..., allgemein dᵢ, d.h. sie sind oberhalb der Ebene 10 verteilt. In dem gezeigten Beispiel sind der Radarsender 11 und alle Radarempfänger 13 an einer gemeinsamen Montagebrücke 17 auf einer gemeinsamen Montagehöhe h und in einer gemeinsamen, die Fahrbahn 3 querüberspannenden Ebene 18 montiert. Auch die Radarstrahlen 12 und reflektierten Radarstrahlen 14 verlaufen in dieser Ebene 18, welche in diesem Beispiel die Messebene der Vorrichtung 1 darstellt. Der Radarsender 11 und die Radarempfänger 13 könnten auch auf individuellen, unterschiedlichen Höhen hᵢ montiert sein, und/oder unregelmäßige Abstände dᵢ haben, und/oder nicht in einer gemeinsamen Ebene liegen; letzteres vereinfacht aber die trigonometrischen Berechnungen.

Die Messebene 18, in der die Radarstrahlen 12, 14 liegen, können auch um die x-Achse geneigt und/oder um die y-Achse gedreht sein, und es können auch mehr als eine Messebene 18 vorgesehen werden. Fig. 2b zeigt eine Ausführungsform mit zwei Vorrichtungen 1, deren Messebenen 18 jeweils parallel zur y/z-Ebene über einer Fahrspur 3', 3" der Fahrbahn 3 verlaufen, um Positionen des Fahrzeugs 2 bzw. seiner Stirnflächen 7, 8 in Längsrichtung z der Fahrbahn 3 zu messen.

Der Radarsender 11 und die Radarempfänger 13 können beliebige in der Technik bekannte Arten von Radarstrahlen 12, 14 senden bzw. empfangen, z.B. CW-Radarstrahlen oder gepulste Radarstrahlen. Die Auswerteeinrichtung 16 kann demgemäß auch herkömmliche Interferenz- und/oder Impulslaufzeit-Messverfahren an den Radarstrahlen 12, 14 vornehmen, um Entfernungen zu den Messpunkten P zu messen.

Die Ausführungsform von Fig. 1 arbeitet nach dem Prinzip der Detektion einer Abschattung der Radarstrahlen 12 bzw. 14 durch ein in der Messebene 18 befindliches Objekt wie das Fahrzeug 2. Die Auswerteeinrichtung 16 wertet dazu die Signalstärken, z.B. Amplituden oder Empfangssignalstärken (received signal strength indications, RSSI) der Empfangssignale Rᵢ der verschiedenen Radarempfänger 13 aus und vergleicht sie beispielsweise miteinander oder mit vorgegebenen Schwellwerten, um jene(n) Radarempfänger 13 zu ermitteln, welche(r) ein vergleichsweise schwächeres oder gar kein Empfangssignal Rᵢ erhält/erhalten: In diesem Fall verdeckt das Fahrzeug 2 den Ausbreitungsweg vom Radarsender 11 zu diesem Radarempfänger 13.

In Kenntnis der Sende- und Empfangspositionen S, Eᵢ (z.B. Montagehöhen h und Abstände dᵢ), und des Aussendewinkels α, über welchen der Radarsender 11 seine Radarstrahlen 12 aussendet, kann somit ungefähr auf die Position des Fahrzeugs 2 in der Messebene 18 geschlossen werden. Je mehr Radarempfänger 13 vorgesehen werden, d.h. je dichter diese liegen, umso genauer kann aus der Abschattung einer oder mehrer Radarempfänger 13 auf die ungefähre Position des Fahrzeugs 2 geschlossen werden.

Die Positionsmessung kann verbessert werden, wenn zusätzlich - z.B. anhand von Interferenzmessungen an CW-Radarstrahlen oder Laufzeitmessungen an gepulsten Radarstrahlen - der Abstand einer reflektierenden Oberfläche des Fahrzeugs 2, hier beispielsweise der Deckfläche 4, zu einem Radarempfänger 13 gemessen wird, aus welchen Zusatzinformationen die Abschattungsinformationen verifiziert und verbessert werden können, um die Position des Fahrzeugs 2, z.B. eines Referenzpunktes P desselben, in der Messebene 18 genauer zu lokalisieren.

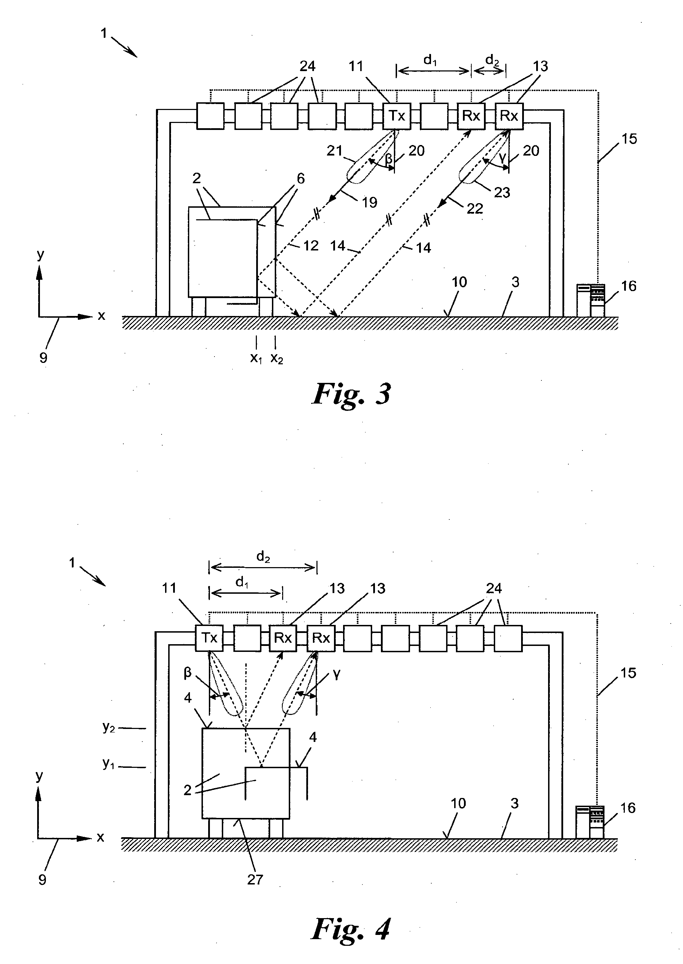

Die Fig. 3 und 4 zeigen ein zu Fig. 1 alternativ oder zusätzlich eingesetztes Messprinzip der Vorrichtung 1. Bei der Ausführungsform der Fig. 3 und 4 werden gerichtete Radarstrahlen 12 verwendet, d.h. der Radarsender 11 sendet seine Radarstrahlen in einer Hauptsenderichtung 19 aus, die unter einem Winkel β zur Vertikalen 20 in der Messebene 18 verläuft. Es versteht sich, dass Radarstrahlen 12 nicht vollkommen exakt in einer einzigen Richtung gebündelt werden können, sondern jede Radarantenne in der Praxis eine keulenförmige Richtcharakteristik 21 hat, wobei die zentrale Achse der Hauptkeule 21 des Radarsenders 13 als Hauptsenderichtung 19 betrachtet wird. Der Öffnungs- bzw. Bündelungswinkel der Sendekeule 21 hängt von der Richtwirkung der Antenne des Radarsenders 11 ab, welche auch durch den sog. "Antennengewinn", gemessen in dB, definiert wird. Beispielsweise erzielt ein Radarsender 11 mit einem Antennengewinn von 20 dB eine gute Richtwirkung mit einem Öffnungswinkel (Halbwertsbreite) der Sendekeule 21 von einigen wenigen Grad bzw. einigen wenigen Steradiant. Je stärker die Richtwirkung des Radarsenders 11, d.h. je höher der Antennengewinn seiner Antenne ist, desto mehr Radarenergie liegt in der Hauptsenderichtung 19 und desto genauer ist die nachfolgend beschriebene Positionsmessung, weil mehr Radarempfänger 13 in kleineren Abständen dᵢ verwendet werden können.

Unter Verwendung eines derart gerichteten Radarsenders 11 kann in der Messebene 18 nun die Position einer im wesentlichen vertikalen Seiten- bzw. Stirnfläche 5 - 8 (Fig. 3) oder einer im wesentlichen horizontalen Deckfläche 4 (Fig. 4) des Fahrzeugs 2 vermessen werden.

Das Messprinzip von Fig. 3 nützt den "Corner-Effekt" ("Katzenaugen-Reflektor"-Effekt) einer Sekundärreflexion des Radarstrahls 12 an der Ebene 10 der Fahrbahn 3 aus, welche einen etwa rechten Winkel mit der zu vermessenden vertikalen Oberfläche, z.B. der Seitenwand 5, 6 oder Stirnwand 7, 8, bildet. Wie in Fig. 3 gezeigt, trifft der reflektierte Radarstrahl 14 je nach der x-Position x₁, x₂ der Seitenwand 6 des Fahrzeugs 2 bei gleichbleibender Hauptsenderichtung 19 auf unterschiedlichen Radarempfängern 13 auf. Je nach x-Position der Seitenfläche 6 empfängt somit ein anderer Radarempfänger 13 das jeweils stärkste Empfangssignal Rᵢ. Durch Auswerten der Signalstärken der Empfangsignale Rᵢ der Radarempfänger 13 in der Auswerteeinrichtung 16 kann somit jener Radarempfänger 13 ermittelt werden, welcher das stärkste Empfangssignal Rᵢ empfängt. Aus der bekannten Empfangsposition Eᵢ dieses Radarempfängers 13 - und den übrigen bekannten geometrischen Abmessungen wie Sendeposition S und Winkel β - kann somit die Position, hier die x-Koordinate, der Seitenfläche 6 des Fahrzeugs 2 im Koordinatensystem 9 ermittelt werden. Dies erfordert lediglich eine einfache trigonometrische Berechnung der in Fig. 3 gezeigten geometrischen Verhältnisse und bedarf weder einer Auswertung von Impulslaufzeiten noch einer Dopplerauswertung der Radarstrahlen 12, 14. Selbstverständlich kann das Positionsmessergebnis durch optionale Berücksichtigung von Laufzeiten und Entfernungsmessungen an den Radarstrahlen 12, 14 noch zusätzlich verbessert werden.

Fig. 4 zeigt das geringfügig abgewandelte Prinzip der Vermessung einer horizontalen Oberfläche wie der Deckfläche 4. Wie ersichtlich trifft der unter dem Winkel β in der Hauptsenderichtung 19 ausgestrahlte Radarstrahl 12 bei unterschiedlichen Höhen y₁, y₂ der Deckfläche 4 des Fahrzeugs 2 auf unterschiedlichen Radarempfänger 13 auf, sodass wieder aus der Empfangsposition Eᵢ jenes Radarsenders 13, welcher das größte Empfangssignal Rᵢ erhält, und den bekannten Werten von Sendeposition S und Winkel β mittels trigonometrischer Berechnung die Position, hier y-Koordinate, der Deckfläche 4 des Fahrzeugs 2 berechnet werden kann.

In den Ausführungsformen der Fig. 3 und 4 kann die Auswahl des jeweils stärksten Empfangssignals Rᵢ und damit am stärksten vom reflektierten Radarstrahl 14 getroffenen Radarempfängers 13 jeweils verbessert werden, indem auch die Radarempfänger 13 mit Richtantennen ausgestattet werden, d.h. einer Hauptempfangsrichtung 22, welche der Achse einer Empfangskeule 23 des jeweiligen Radarempfängers 13 entspricht. Bei der Ausführungsform von Fig. 3 wird dazu die Hauptempfangsrichtung 22, hier repräsentiert durch den Winkel γ zur Vertikalen 20, parallel zur Hauptsenderichtung 19 eingestellt (β = γ) ; und bei der Ausführungsform von Fig. 4 wird dazu die Hauptempfangsrichtung 22 bezüglich der Vertikalen 20 spiegelbildlich zur Hauptsenderichtung 19 eingestellt (γ = -β).

Wie aus den Fig. 3 und 4 ersichtlich, kann für jeden der Radarsender und -empfänger 11, 13 auch jeweils ein Radarsendeempfänger (Transceiver) 24 verwendet werden. Mit anderen Worten wird an den Sende- und Empfangspositionen S, Eᵢ jeweils ein Sendeempfänger 24 angeordnet, der wahlweise einmal als Radarsender 11 und einmal als Radarempfänger 13 betrieben werden kann. Die Betriebsartenauswahl des jeweiligen Sendeempfängers 24 kann dabei im Zeitmultiplex von der Auswerteeinrichtung 16 gesteuert werden, d.h. diese wählt aus, zu welchem Zeitpunkt ein Sendeempfänger 24 als Radarsender 11 oder als Radarempfänger 13 arbeitet.

Bevorzugt sind zu einem bestimmten Zeitpunkt jeweils nur einer der Sendeempfänger 24 als Radarsender 11 und alle anderen als Radarempfänger 13 tätig (Zeit-Multiplex-Verfahren; TDMA, Time Division Multiplex Access). Dies ist jedoch nicht zwingend; auch mehrere Radarsender 11 können gleichzeitig betrieben werden, beispielsweise auf unterschiedlichen Frequenzen (Frequenz-Multiplex-Verfahren; FDMA, Frequency Division Multiplex Access) oder mittels unterschiedlicher orthogonaler Codierungen bzw. Modulationen (Code-Multiplex-Verfahren; CDMA, Code Division Multiple Access), sodass die Vorrichtung 1 sich gleichsam aus mehreren "Sub"-Vorrichtungen 1 zusammensetzt, d.h. jeweils einer Zusammenstellung aus einem Radarsender 11 und mehreren Radarempfängern 13. Auch ist ersichtlich, dass die Positionen S des Radarsenders 11 und Eᵢ der Radarempfänger 13 beliebig und austauschbar oberhalb der Ebene 10 der Fahrbahn 3 sind und jeweils für die gewünschte Messordnung, d.h. den gewünschten Bereich von Messpunkten in der Messebene 13, der damit vermessen werden soll, gewählt werden.

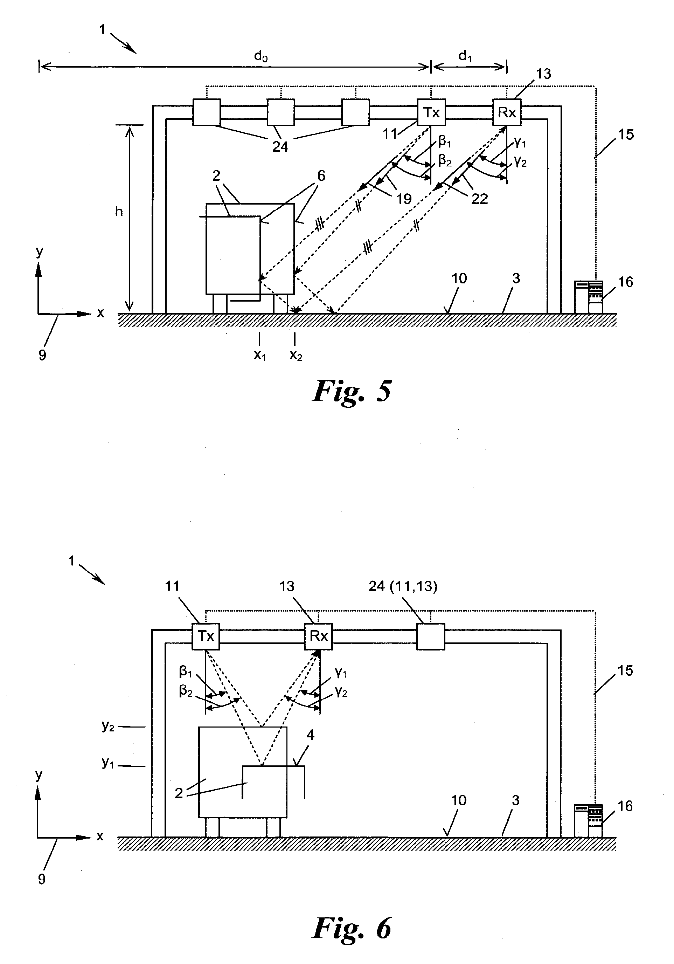

Die Fig. 5 und 6 zeigen ein weiteres Messprinzip der Vorrichtung 1 der Fig. 1 bis 4, welches alternativ oder zusätzlich zu den Messprinzipien der Fig. 1 bis 4 verwendet werden kann. In den Fig. 5 und 6 wird jeweils ein - aus den Sendeempfängern 24 gebildetes - Paar aus einem Radarsender 11 und einem Radarempfänger 13 verwendet, die jeweils mit richtungssteuerbaren Richtantennen ausgestattet sind: Sowohl die Hauptsenderichtung 19 des Radarsenders 11 als auch die Hauptempfangsrichtung 22 des Radarempfängers 13 ist steuerbar, d.h. ihre Winkel β und γ in der Messebene 18 veränderbar. Die Fig. 5 und 6 zeigen dabei jeweils zwei beispielhafte Winkelstellungen β₁, β₂ und γ₁ und γ₂ der Hauptsende- und Hauptempfangsrichtungen 19, 22.

In Fig. 5 werden zur Vermessung von vertikalen Oberflächen 5 - 8 des Fahrzeugs 2 die Hauptsende- und Hauptempfangsrichtungen 19, 22 jeweils parallel gewählt: Zu einem ersten Zeitpunkt t₁ ist β₁ = γ₁, und zu einem zweiten Zeitpunkt t₂ ist β₂ = γ₂. Bei der Ausführungsform der Fig. 6 zur Vermessung von horizontalen Oberflächen 4 werden bezüglich der Vertikalen 20 gegengleiche Hauptsende- und Hauptempfangsrichtungen 19, 22 verwendet, d.h. zu einem ersten Zeitpunkt t₁ ist β₁ = -γ₁, und zu einem zweiten Zeitpunkt t₂ ist β₂ = -γ₂. Es versteht sich, dass die Hauptsende- und -empfangsrichtungen 19, 22 des Radarsenders 11 und der Radarempfängers 13 auch noch in weitere Stellungen zu weiteren Zeitpunkten t₃, t₄ ..., allgemein tᵢ, gebracht werden können; beispielsweise werden die Hauptsende- und Hauptempfangsrichtungen 19, 22 kontinuierlich oder diskretisiert über einen Winkelbereich verschwenkt.

Durch aufeinanderfolgendes Verwenden unterschiedlicher Hauptsende- und Empfangsrichtungen 19, 22 bzw. Winkel β, γ können somit verschiedene Messpunkte in der Messebene 18 "abgetastet" werden: Bei jener Winkelstellung β, γ bzw. Hauptsende- und Empfangsrichtung 19, 22, bei welcher das stärkste Empfangssignal Rᵢ im Radarempfänger 13 empfangen wird, ist offensichtlich die Reflexion an der zu vermessenden Fläche 6 (Fig. 5) bzw. 4 (Fig. 6) aufgetreten. Aus der so gefundenen Richtung 19, 22 bzw. β, γ und kann dann in Kenntnis der bekannten Sende- und Empfangspositionen S, Eᵢ des Radarsenders 11 und Radarempfängers 13 (hier: Montagehöhe h und Abstände dᵢ) wieder die x-Koordinate der Seitenwand 6 (Fig. 5) bzw. die y-Koordinate der Deckwand 4 (Fig. 6) mittels trigonometrischer Überlegungen berechnet werden.

Zur Richtungssteuerung der Radarsender und Radarempfänger 11, 13 können diese beispielsweise mit mechanisch schwenkbaren Richtantennen, mit einer Mehrzahl fest eingestellter und jeweils selektiv auswählbarer Richtantennen, oder bevorzugt mit phasengesteuerten Antennenarrays (phased arrays) ausgestattet werden, welch letztere, wie dem Fachmann bekannt, durch unterschiedliche Phasenansteuerung einer Vielzahl nebeneinander angeordneter Antennen Richtwirkung in einer gewünschten Richtung entfalten. Die Richtungssteuerung dient auch dazu, nicht nur einen einzelnen Punkt in dessen Lage zu bestimmen, sondern die Lage einer ganzen Fläche durch einen Schwenk der Antennestrahlrichtung zu ermitteln (zu "scannen").

Anstelle eines zeitlich aufeinanderfolgenden Verwendens verschiedener Hauptsende- und Hauptempfangsrichtungen 19, 22 bzw. Winkel β, γ können diese auch gleichzeitig verwendet werden, wenn der Radarsender 11 und der Radarempfänger 13 jeweils mehrere unterschiedlich ausgerichtete Richtantennen besitzen, wie später noch anhand von Fig. 8 weiter erläutert.

Es versteht sich, dass die Ausführungsformen der Fig. 3 und 4 einerseits und der Fig. 5 und 6 andererseits auch miteinander kombiniert werden können. So können beispielsweise bei den richtungssteuerbaren Radarsendern und -empfängern 11, 13 der Ausführungsform der Fig. 5, 6 auch zusätzliche Radarempfänger 13 an anderen Empfangspositionen Eᵢ von der Auswerteeinrichtung 16 ausgewertet werden und jener Radarempfänger 13, der bei einer bestimmten Winkelstellung β, γ das jeweils stärkste Empfangssignal Rᵢ führt, für die trigonometrische Auswertung herangezogen werden. Dadurch kann der Messbereich (die "Apertur") der Messvorrichtung der Fig. 5, 6 erweitert werden, beispielsweise über die gesamte Breite der Fahrbahn 3 (Fig. 2a) oder einen längeren Längsabschnitt der Fahrbahn (Fig. 2b). Umgekehrt können bei der Ausführungsform der Fig. 3, 4 zusätzlich diese Richtungen β, γ variiert werden, um mit derselben Anzahl von Radarempfängern 13 zusätzliche Mess- bzw. Abtastpunkte in der Messebene 18 zu erhalten.

Fig. 7 zeigt das Prinzip des "range gating" durch Einrichtung eines Zeitfensters 25 nach jeweils einem Sendeimpuls T eines gepulsten Radarstrahls 12. Nur innerhalb des Zeitfensters 25 in den Empfangsignalen Rᵢ der Radarempfänger 13 auftretende Empfangsimpulse Iᵢ werden berücksichtigt; ein nach dem Zeitfenster 25 ("zu spät") innerhalb des anschließenden Sperrfensters 26 einlangender Empfangsimpuls I₄ wird nicht berücksichtigt, d.h. die Auswerteeinrichtung 16 ignoriert bei ihrem Signalstärkenvergleich jene Empfangssignale Rᵢ von Radarempfängern 13, welche einen Empfangsimpuls außerhalb des Zeitfensters 25 nach dem jeweils zugehörigen Sendeimpuls T betreffen. Analog dazu sind dafür auch andere Laufzeit-Messprinzipien wie z.B. FMCW-Verfahren (Frequency Modulated Continous Wave) für das "range gating" anwendbar, wie dem Fachmann bekannt.

Dadurch können Mehrfachreflexionen der Radarstrahlen 13, wie sie beispielsweise an Umgebungsobjekten wie der Montagebrücke 17 oder beispielsweise zwischen der Bodenplatte 27 des Fahrzeugs 2 und der Fahrbahn 3 auftreten und zu längeren Signallaufzeiten führen, ausgeblendet werden, sodass lediglich Primärreflexionen am Fahrzeug 2 (Fig. 1, 4, 6) oder Primär- und Sekundärreflexionen am Fahrzeug 2 und der Fahrbahn 3 (Fig. 3, 5) bei der Messung berücksichtigt werden.

Fig. 8 zeigt das Empfangssignal Rᵢ eines einzigen Radarempfängers 13 der Ausführungsform der Fig. 5, 6 in aufeinanderfolgenden Stadien a, b, c,... des Messverfahrens, welche jeweils einer anderen Winkelstellung β, γ der Hauptsende- und Hauptempfangsrichtungen 19, 22 entsprechen, über der Zeit t. Wie ersichtlich, treten bei verschiedenen Winkeln β₁, γ₁; β₂, γ₂; β₃, γ₃ Empfangssignale R₁, R₂, R₃ mit unterschiedlichen Signalstärken RSSI₃, RSSI₂, RSSI₁ - bzw. bei gepulsten Radarstrahlen mit verschieden starken Empfangsimpulsen I₃, I₂, I₁ - auf. Durch Aufzeichnen der Empfangssignale Rᵢ oder Impulse Iᵢ in den aufeinanderfolgenden Stadien a, b, c und anschließendes Vergleichen der Signalstärken RSSIᵢ bzw. Impulse Iᵢ kann nun jene Winkelstellung βᵢ, γᵢ ermittelt werden, bei welcher die maximale Signalstärke RSSIᵢ auftritt. Damit sind wieder die Winkel βᵢ, γ₁ aufgefunden, und anhand der genannten trigonometrischen Berechnungen kann die Position der jeweils zu vermessenden Oberfläche 6 bzw. 4 berechnet werden.

In jener Ausführungsform, bei welcher die Radarsender und -empfänger 11, 13 jeweils mehrere in den verschiedenen Winkeln β₁, γ₁; β₂, γ₂ ; β₃, γ₃ ausgerichtete Richtantennen besitzen, so dass die vorgenannten Messungen in den verschiedenen Hauptsende- und Hauptempfangsrichtungen 19, 22 gleichzeitig durchgeführt werden können, stellen die in Fig. 8 gezeigten Empfangssignale Rᵢ gleichzeitig die Empfangssignale verschiedener Richtantennen a), b), c)... des Radarempfängers 13 dar. Die Empfangssignale Rᵢ werden also nicht in aufeinanderfolgenden Stadien, sondern gleichzeitig an den Ausgängen verschiedener Richtantennen a), b), c)... ein und desselben Radarempfängers 13 erhalten.

Auch in dieser Ausführungsform kann wieder durch Vergleichen der Signalstärken RSSIᵢ bzw. Impulse Iᵢ jene Richtantenne a), b), c)... des Radarempfängers 13 und damit jene Winkelstellung γᵢ (γᵢ = βᵢ in Fig. 5; γᵢ = - βᵢ in Fig. 6) ermittelt werden, bei welcher die maximale Signalstärke RSSIᵢ auftritt. Damit sind wieder die Winkel βᵢ und γᵢ aufgefunden, und anhand der genannte trigonometrischen Berechnungen kann die Position der jeweils zu vermessenden Oberfläche 6 bzw. 4 wieder berechnet werden. Auch diese Variante ist mit allen vorgenannten Varianten des Verfahrens und der Vorrichtung kombinierbar.

## Patentansprüche

1. Verfahren zum Messen der Position (P) einer Oberfläche (4 - 8) eines Fahrzeugs (2) auf einer Fahrbahn (3), mit den Schritten:
a) Aussenden eines ersten Radarstrahls (12) von einer Sendeposition (S) oberhalb der Ebene (10) der Fahrbahn (3) in einer schräg nach unten geneigten ersten Hauptsenderichtung (19), Empfangen eines ersten reflektierten Radarstrahls (14) an einer Empfangsposition (Eᵢ) oberhalb der Ebene (10) der Fahrbahn (3) in einer schräg nach unten geneigten ersten Hauptempfangsrichtung (22) und Umwandeln des ersten reflektierten Radarstrahls (14) in ein erstes Empfangssignal (Rᵢ), wobei die Sendeposition (S) und die Empfangsposition (Eᵢ) voneinander beabstandet sind und die erste Hauptsenderichtung (19) und die erste Hauptempfangsrichtung (22) in einer gemeinsamen Ebene (18) liegen;
b) Aussenden eines zweiten Radarstrahls (12) von der Sendeposition (S) in einer schräg nach unten geneigten, von der ersten verschiedenen zweiten Hauptsenderichtung (19), Empfangen eines zweiten reflektierten Radarstrahls (14) an der Empfangsposition (Eᵢ) in einer schräg nach unten geneigten, von der ersten verschiedenen zweiten Hauptempfangsrichtung (22) und Umwandeln des zweiten reflektierten Radarstrahls (14) in ein zweites Empfangssignal (Rᵢ), wobei die zweite Hauptsenderichtung (19) und die zweite Hauptempfangsrichtung (22) in der genannten Ebene (18) liegen;
c) Auswählen des Empfangssignals (Rᵢ) mit der größten Signalstärke (RSSIᵢ); und
d) Ermitteln der genannten Position (P) aus den Sende- und Empfangspositionen (S, Eᵢ) und den Hauptsende- und Hauptempfangsrichtungen (19, 22) des Empfangssignals (Rᵢ) mit der größten Signalstärke (RSSIᵢ);
wobei die Schritte a) und b) entweder zeitlich aufeinanderfolgend oder gleichzeitig durchgeführt werden.

2. Verfahren nach Anspruch 1, **dadurch gekennzeichnet, dass** die Radarstrahlen (12, 14) CW- oder FMCW-Radarstrahlen sind.

3. Verfahren nach Anspruch 1, **dadurch gekennzeichnet, dass** die Radarstrahlen (12, 14) Sendeimpulse (T) und die Empfangssignale (Rᵢ) folglich Empfangsimpulse (Iᵢ) enthalten, wobei für das genannte Auswählen nur solche Empfangssignale (Rᵢ) berücksichtigt werden, deren Empfangsimpulse (Eᵢ) jeweils innerhalb eines vorgegebenen Zeitfensters (25) nach einem Sendeimpuls (T) liegen.

4. Verfahren nach einem der Ansprüche 1 bis 3, **dadurch gekennzeichnet, dass** jede Hauptsenderichtung (19) und zugehörige Hauptempfangsrichtung (22) zueinander parallel sind, um die Position einer im wesentlichen vertikalen Oberfläche (5 - 8) zu messen.

5. Verfahren nach einem der Ansprüche 1 bis 3, **dadurch gekennzeichnet, dass** jede Hauptsenderichtung (19) und zugehörige Hauptempfangsrichtung (22) bezüglich der Vertikalen (20) spiegelbildlich geneigt sind, um die Position (P) einer im wesentlichen horizontalen Oberfläche (4) zu messen.

6. Verfahren nach einem der Ansprüche 1 bis 5, **dadurch gekennzeichnet, dass** mehr als zwei verschiedene Hauptsende- und Hauptempfangsrichtungen (19, 22) verwendet werden, um mehr als zwei Empfangssignale (Rᵢ) zu erhalten, unter denen das Empfangssignal (Rᵢ) mit der größten Signalstärke (RSSIᵢ) ausgewählt wird.

7. Verfahren nach einem der Ansprüche 1 bis 6, **dadurch gekennzeichnet, dass** zumindest eine weitere Empfangsposition (Ei) zum Empfangen der reflektierten Radarstrahlen (14) in den genannten Hauptempfangsrichtungen (22) verwendet wird, um weitere Empfangssignale (Rᵢ) zu erhalten, wobei unter allen Empfangssignalen (Rᵢ) und weiteren Empfangssignalen (Rᵢ) das Empfangssignal (Rᵢ) mit der größten Signalstärke (RSSIᵢ) ausgewählt wird.

8. Verfahren nach Anspruch 7, **dadurch gekennzeichnet, dass** die Empfangsposition (Eᵢ) und die weitere Empfangsposition (Eᵢ) in der genannten gemeinsamen Ebene (18) liegen.

9. Verfahren nach einem der Ansprüche 1 bis 8, **dadurch gekennzeichnet, dass** die genannte Ebene (18) quer zur Fahrbahn (3) liegt, bevorzugt indem eine die Fahrbahn (3) querüberspannenden Montagebrücke (17) verwendet wird, an welcher Radarsender (11) und Radarempfänger (13) zum Aussenden und Empfangen der Radarstrahlen montiert werden.

10. Verfahren nach einem der Ansprüche 1 bis 9, **dadurch gekennzeichnet, dass** die Hauptsende- und Hauptempfangsrichtungen (19, 22) mittels phasengesteuerter Antennenarrays oder selektiver Auswahl einzelner Richtantennen (a, b, c) eingestellt werden.

11. Verfahren nach einem der Ansprüche 3 bis 10, **dadurch gekennzeichnet, dass** Impulslaufzeitmessungen zwischen Sende- und Empfangsimpulsen (T, Iᵢ) durchgeführt werden und daraus der Abstand der Oberfläche (4 - 8) zu den Sende- und Empfangspositionen (S, Eᵢ) ermittelt wird, um die Positionsmessung zu verbessern.

12. Verfahren nach einem der Ansprüche 1 bis 10, **dadurch gekennzeichnet, dass** die Radarstrahlen (12, 14) FMCW-Radarstrahlen sind und daraus der Abstand der Oberfläche (4 - 8) zu den Sende- und Empfangspositionen (S, E) nach dem FMCW-Verfahren ermittelt wird, um die Positionsmessung zu verbessern.

13. Verfahren nach einem der Ansprüche 1 bis 10, **dadurch gekennzeichnet, dass** die Radarstrahlen (12, 14) CW-Radarstrahlen sind und daraus der Abstand der Oberfläche (4 - 8) zu den Sende- und Empfangspositionen (S, E) nach einem Phaseninterferenz-Verfahren ermittelt wird, um die Positionsmessung zu verbessern.

14. Verfahren nach einem der Ansprüche 1 bis 10, **dadurch gekennzeichnet, dass** die Radarstrahlen (12, 14) von Radarsendeempfänger (24) gesendet und empfangen werden, die jeweils im Code-, Zeit- oder Frequenzmultiplex wahlweise als Sender (11) oder Empfänger (13) betrieben werden.

15. Verfahren nach einem der Ansprüche 1 bis 14, **dadurch gekennzeichnet, dass** die Frequenz der Radarstrahlen (12, 14) 1 GHz bis 100 GHz beträgt, bevorzugt 50 GHz bis 100 GHz.

## Claims

1. A method for measuring the position (P) of a surface (4-8) of a vehicle (2) on a roadway (3), comprising the steps:
a) transmitting a first radar beam (12) from a transmitting position (S) above the plane (10) of the roadway (3) in a first primary transmitting direction (19) inclined downwardly at an angle, receiving a first reflected radar beam (14) at a receiving position (Eᵢ) above the plane (10) of the roadway (3) in a first primary receiving direction (22) inclined downwardly at an angle, and converting the first reflected radar beam (14) into a first received signal (Rᵢ), wherein the transmitting position (S) and the receiving position (Eᵢ) are distanced from one another and the first primary transmitting direction (19) and the first primary receiving direction (22) lie in a common plane (18);
b) transmitting a second radar beam (12) from the transmitting position (S) in a second primary transmitting direction (19), which is inclined downwardly at an angle and different from the first primary transmitting direction (19), receiving a second reflected radar beam (14) at the receiving position (E₁) in a second primary receiving direction (22) which is inclined downwardly at an angle and different from the first primary receiving direction (19), and converting the second reflected radar beam (14) into a second received signal (Rᵢ), wherein the second primary transmitting direction (19) and the second primary receiving direction (22) lie in said common plane (18);
c) selecting the received signal (Rᵢ) having the greatest signal strength (RSSIᵢ); and
d) determining the said position (P) from the transmitting and receiving positions (S, Eᵢ) and from the primary transmitting and primary receiving directions (19, 22) of the received signal (Rᵢ) having the greatest signal strength (RSSIᵢ);
wherein steps a) and b) are carried out either chronologically in succession or at the same time.

2. The method according to Claim 1, **characterised in that** the radar beams (12, 14) are CW or FMCW radar beams.

3. The method according to Claim 1, **characterised in that** the radar beams (12, 14) contain transmitted pulses (T) and the received signals (Rᵢ) consequently contain received pulses (Iᵢ), wherein only those received signals (Rᵢ) of which the received pulses (Eᵢ) lie within a predefined time window (25) after a transmitted pulse (T) are taken into account for said selecting.

4. The method according to one of Claims 1 to 3, **characterised in that** each primary transmitting direction (19) and associated primary receiving direction (22) are parallel to one another, in order to measure the position of a substantially vertical surface (5-8).

5. The method according to one of Claims 1 to 3, **characterised in that** each primary transmitting direction (19) and associated primary receiving direction (22) are inclined with respect to the vertical (20) in a mirror-inverted manner, in order to measure the position (P) of a substantially horizontal surface (4).

6. The method according to one of Claims 1 to 5, **characterised in that** more than two different primary transmitting and primary receiving directions (19, 22) are used in order to obtain more than two received signals (Rᵢ), from which the received signal (Rᵢ) having the greatest signal strength (RSSIᵢ) is selected.

7. The method according to one of Claims 1 to 6, **characterised in that** at least one further receiving position (Eᵢ) for receiving the reflected radar beams (14) in said primary receiving directions (22) is used in order to obtain further received signals (Rᵢ), wherein the received signal (Rᵢ) having the greatest signal strength (RSSIᵢ) is selected from all received signals (Rᵢ) and further received signals (Rᵢ).

8. The method according to Claim 7, **characterised in that** the receiving position (Eᵢ) and the further receiving position (Eᵢ) lie in the said common plane (18).

9. The method according to one of Claims 1 to 8, **characterised in that** the said common plane (18) lies transversely to the roadway (3), preferably by using a mounting gantry (17) spanning the roadway (3) transversely, on which radar transmitters (11) and radar receivers (13) for transmitting and receiving the radar beams are mounted.

10. The method according to one of Claims 1 to 9, **characterised in that** the primary transmitting and primary receiving directions (19, 22) are set by means of phase-controlled antenna arrays or a selective selection of individual directional antennas (a, b, c).

11. The method according to one of Claims 3 to 10, **characterised in that** pulse time-of-flight measurements between transmitted and received pulses (T, Iᵢ) are carried out and the distance between the surface (4-8) and the transmitting and receiving positions (S, Eᵢ) is determined therefrom, in order to improve the position measurement.

12. The method according to one of Claims 1 to 10, **characterised in that** the radar beams (12, 14) are FMCW radar beams and the distance between the surface (4-8) and the transmitting and receiving positions (S, E) is determined therefrom in accordance with the FMCW method, in order to improve the position measurement.

13. The method according to one of Claims 1 to 10, **characterised in that** the radar beams (12, 14) are CW radar beams and the distance between the surface (4-8) and the transmitting and receiving positions (S, E) is determined therefrom in accordance with a phase interference method, in order to improve the position measurement.

14. The method according to one of Claims 1 to 10, **characterised in that** the radar beams (12, 14) are transmitted and received by radar transceivers (24), which are each operated selectively as a transmitter (11) or receiver (13) in code, time or frequency multiplex.

15. The method according to one of Claims 1 to 14, **characterised in that** the frequency of the radar beams (12, 14) is 1 GHz to 100 GHz, preferably 50 GHz to 100 GHz.

## Revendications

1. Procédé pour la mesure de la position (P) d'une surface (4 - 8) d'un véhicule (2) sur une chaussée (3), avec les étapes suivantes :
a) émission d'un premier rayon radar (12) à partir d'une position d'émission (S) au-dessus du plan (10) de la chaussée (3) dans une première direction d'émission principale (19) inclinée en biais vers le bas, réception d'un premier rayon radar réfléchi (14) au niveau d'une position de réception (Eᵢ) au-dessus du plan (10) de la chaussée (3) dans une première direction de réception principale (22) inclinée en biais vers le bas, et conversion du premier rayon radar réfléchi (14) en un premier signal de réception (Rᵢ), dans lequel la position d'émission (S) et la position de réception (Eᵢ) sont espacées l'une de l'autre et dans lequel la première direction d'émission principale (19) et la première direction de réception principale (22) s'étendent dans un plan commun (18) ;
b) émission d'un deuxième rayon radar (12) à partir de la position d'émission (S) dans une deuxième direction d'émission principale (19) inclinée en biais vers le bas et différente de la première, réception d'un deuxième rayon radar réfléchi (14) au niveau d'une position de réception (Eᵢ) dans une deuxième direction de réception principale (22) inclinée en biais vers le bas et différente de la première, et conversion du premier rayon radar réfléchi (14) en un deuxième signal de réception (Rᵢ), dans lequel la deuxième direction d'émission principale (19) et la deuxième direction de réception principale (22) s'étendent dans ledit plan (18) ;
c) sélection d'un signal de réception (Rᵢ) présentant la plus grande puissance de signal (RSSIᵢ) ; et
d) détection de ladite position (P) à partir des positions d'émission et de réception (S, Eᵢ) et des directions d'émission et de réception principales (19, 22) du signal de réception (Rᵢ) présentant la plus grande puissance de signal (RSSIᵢ) ;
dans lequel les étapes a) et b) sont exécutées soit l'une après l'autre soit simultanément.

2. Procédé selon la revendication 1, **caractérisé en ce que** les rayons radar (12, 14) sont des rayons radar CW ou FMCW.

3. Procédé selon la revendication 1, **caractérisé en ce que** les rayons radar (12, 14) contiennent des impulsions d'émission (T) et les signaux de réception (Rᵢ) contiennent donc des impulsions de réception (Iᵢ), dans lequel, pour ladite sélection, seuls les signaux de réception (Rᵢ), dont les impulsions de réception (Iᵢ) sont respectivement incluses dans une fenêtre temporelle (25) prédéfinie après une impulsions d'émission (T), sont pris en compte.

4. Procédé selon l'une des revendications 1 à 3, **caractérisé en ce que** chaque direction d'émission principale (19) et chaque direction de réception principale (22) correspondante sont parallèles entre elles, pour mesurer la position d'une surface sensiblement verticale (5 - 8).

5. Procédé selon l'une des revendications 1 à 3, **caractérisé en ce que** chaque direction d'émission principale (19) et chaque direction de réception principale (22) correspondante sont inclinées de façon symétrique par rapport à la verticale (20), pour mesurer la position (P) d'une surface sensiblement horizontale (4).

6. Procédé selon l'une des revendications 1 à 5, **caractérisé en ce qu'**il est prévu plus de deux directions d'émission et de réception principales (19, 22) différentes, afin d'obtenir plus de deux signaux de réception (Rᵢ), parmi lesquels le signal de réception (Rᵢ) présentant la plus grande puissance de signal (RSSIᵢ) est sélectionné.

7. Procédé selon l'une des revendications 1 à 6, **caractérisé en ce qu'**au moins une position de réception (Eᵢ) supplémentaire est prévue pour la réception des rayons radar réfléchis (14) dans lesdites directions de réception principales (22), afin d'obtenir des signaux de réception (Rᵢ) supplémentaires, dans lequel, parmi tous les signaux de réception (Rᵢ) et signaux de réception (Ri) supplémentaires, le signal de réception (Rᵢ) présentant la plus grande puissance de signal (RSSIᵢ) est sélectionné.

8. Procédé selon la revendication 7, **caractérisé en ce que** la position de réception (Eᵢ) et la position de réception (Eᵢ) supplémentaire se trouvent dans ledit plan commun (18).

9. Procédé selon l'une des revendications 1 à 8, **caractérisé en ce que** ledit plan (18) s'étend transversalement à la chaussée (3), de préférence à l'aide d'un pont de montage (17) traversant la chaussée (3), sur lequel sont montés des émetteurs radar (11) et des récepteurs radar (13) pour l'émission et la réception des rayons radar.

10. Procédé selon l'une des revendications 1 à 9, **caractérisé en ce que** les directions principales d'émission et de réception (19, 22) peuvent être réglées au moyen d'un réseau d'antennes à commande de phase ou d'une sélective sélection d'antennes directives (a, b, c) individuelles.

11. Procédé selon l'une des revendications 3 à 10, **caractérisé en ce que** des mesures de temps de parcours entre des impulsions d'émission et de réception (T, Iᵢ) sont effectuées, permettant ainsi de déterminer la distance entre la surface (4 - 8) et les positions d'émission et de réception (S, Eᵢ), afin d'améliorer la mesure de position.

12. Procédé selon l'une des revendications 1 à 10, **caractérisé en ce que** les rayons radar (12, 14) sont des rayons radar FMCW permettant de déterminer la distance entre la surface (4 - 8) et les positions d'émission et de réception (S, E) selon le procédé FMCW, afin d'améliorer la mesure de position.

13. Procédé selon l'une des revendications 1 à 10, **caractérisé en ce que** les rayons radar (12, 14) sont des rayons radar CW permettant de déterminer la distance entre la surface (4 - 8) et les positions d'émission et de réception (S, E) selon le procédé d'interférence de phase, afin d'améliorer la mesure de position.

14. Procédé selon l'une des revendications 1 à 10, **caractérisé en ce que** les rayons radar (12, 14) sont émis et reçus par des émetteurs-récepteurs radar (24), lesquels fonctionnent respectivement comme émetteur radar (11) ou comme récepteur radar (13), au choix, dans un multiplexage fréquentiel ou temporel ou à répartition par code.

15. Procédé selon l'une des revendications 1 à 14, **caractérisé en ce que** la fréquence des rayons radar (12, 14) s'élève de 1 GHz à 100 GHz, de préférence de 50 GHz à 100 GHz.
